# EUROPEAN PATENT SPECIFICATION

(11) **EP 3 075 265 B1**
(45) Date of publication and mention of the grant of the patent: **27.02.2019**
(21) Application number: 15161592.9
(22) Date of filing: 30.03.2015
(51) Int. Cl.: A23N 15/08, A01G 3/02, A01G 5/00

(54) **APPARATUS FOR REMOVING THE STEM FROM THE BULB OF BULBOUS PLANTS**
VORRICHTUNG ZUM ENTFERNEN DES STÄNGELS VON DER KNOLLE VON ZWIEBELGEWÄCHSEN
APPAREIL POUR RETIRER LA TIGE D'UN BULBE DE PLANTES BULBEUSES

(43) Date of publication of application: 05.10.2016
(73) Proprietor: Bercomex B.V., 1624 PB Hoorn (NL)
(72) Inventor: Schouten, Robert, 1055 EB Amsterdam (NL); Miedema, Willibrordus Jaring, 1778 KN Westerland (NL); Wagenaar, Robér Bernardus Jozef, 1696 BD Oosterblokker (NL); Seggelink, Pieter Willem, 1622 DE Hoorn (NL)
(74) Representative: De Vries & Metman

(56) References cited:
- NL-A- 7 202 266
- NL-A- 8 200 419
- NL-C2- 1 027 378
- US-A- 3 302 727
- US-A1- 2005 053 706

## Description

The invention relates to an apparatus for removing the stem from the bulb of bulbous plants, comprising conveyor means for the bulbous plants, cutting means for cutting off the bottom part of a bulb at a side of the bulb opposite to the stem, positioning means for positioning the bulb relative to the cutting means, crushing means for crushing the bulb of which the bottom part has been cut off and bulb removal means for removing the crushed bulb from the stem.

Such an apparatus is known from NL-A-8200419. When an apparatus of the above type is used to remove the stem from the bulb of cut flowers such as tulips, it is a desire to obtain, after removing the crushed bulb, a stem with a maximum length (generally tulips, or cut flowers in general, have a larger economic value if provided with a long stem). To arrive at such a result it is required to minimize the amount (thickness) of the bottom part of the bulb that is cut off.

It is an object of the present invention to provide an improved apparatus of the above type.

In accordance with the present invention an apparatus is provided which is characterized by root removal means positioned, as considered in the conveying direction of the conveyor means, upstream of the cutting means for removing at least part of the roots from the bottom part of the bulb.

It has been recognised that the roots which protrude from the bottom part of the bulb may adversely interfere with the correct functioning of the positioning means. Depending on the specific constitution of the roots (such as for example the amount of separate root parts, the distribution and position of such root parts on the bulb and the resiliency of such root parts) the position of the bulbs relative to the cutting means may vary in an unpredictable manner, even in the event of bulbs with substantially equal dimensions. As a result the amount (thickness) of the bottom part that is cut off also will vary, and in a substantial amount of cases will be larger than necessary (yielding shorter stems than theoretically achievable). By removing at least part of the roots, upstream of the cutting means, the positioning precision of the positioning means is increased and the amount of bottom part removed by the cutting means may be minimised and thus the remaining length of the stem may be increased to be closer to an optimal (more valuable) size.

The amount of roots that are removed, may vary depending on the type of bulbous plant. If all roots are rather sturdy, it is best to remove as much roots as possible; if the roots are rather flexible, removing only part thereof already may yield good results.

It is noted that the orientation in which the bulbous plants are conveyed by the conveyor means may vary. For example this may be a horizontal orientation, or a vertical orientation. In the latter case the bulbous plants generally are supported at their bulbs with the stems hanging down. In such a case the "bottom part" actually is at the top of the plant.

In an embodiment of the apparatus the root removal means comprise two adjacent shafts defining a gap there between and provided with circumferential engagement members for engaging the roots and driven for a rotation in opposite senses in a manner for pulling the roots in the gap between the shafts by means of the engagement members. The roots of the bulbous plants thus are torn free from the bulb (it is noted that torn free also may mean that the roots are broken, leaving a small length thereof connected to the bulb).

For assuring that the shafts operate in an effective manner, a number of measures may be taken. For example the engagement members at least partly may comprise a flexible cover surrounding the shafts and providing sufficient friction for firmly engaging the roots. Such a flexible cover may be made of rubber (or any other convenient material).

Alternatively it is conceivable that the engagement members at least partly comprise paddles (or other protruding members) extending outwardly from the shafts. Such paddles may be flexible.

It is also possible to combine the previous options, such that the engagement members in the longitudinal direction of the shafts alternatingly comprise flexible cover sections and sections provided with paddles. The precise configuration of the engagement members may depend, among others, on the type or constitution of bulbous plants to be processed by the apparatus.

The efficiency of the root removal means also may be influenced in other ways, for example by choosing a specific orientation of the shafts. Thus, in one embodiment the shafts are positioned side by side in a plane which is inclined relative to the conveying direction of the conveyor means in such a manner that, as considered in said conveying direction, upstream ends of the shafts are positioned further away from the conveyor means than downstream ends of the shafts. This yields a gradual increase of the removal force on the roots, while further the roots are engaged firstly at their tops and gradually more inward towards the bulb.

In another embodiment of the apparatus according to the present invention the conveyor means at least in the region of the cutting means are devised for resiliently supporting the bulbs for allowing a settling movement of the bulbs under influence of the positioning means for achieving the same position of the extreme end of the bottom part relative to the cutting means irrespective the dimensions of the bulb.

After the roots have (at least partly) been removed, the positioning means (for example rotating discs engaging the bulb) will position the bulb with its extreme end in the desired position relative to the cutting means. During such a process the bulbs are supported by the conveyor means and the resilient nature thereof allows to cope with bulbs with different dimensions.

Specifically it is conceivable that the position of the conveyor means is resiliently settable. This means that the position of the conveyor means can change under influence of forces imposed on the bulbs by the positioning means (thus the distance between the conveyor means and the positioning means, and thus the cutting means, may increase -due to such forces- or decrease -due to the resiliency-). Constructively this may be realised in an array of different manners; for example, the conveyor means may comprise conveyor strings or belts guided by resiliently settable guides (such as, for example, pulleys or rollers which are spring loaded).

Alternatively it is conceivable that the conveyor means are made of a resilient material. As an example, in one embodiment the conveyor means comprise conveyor strings which in cross section define an at least partly hollow profile, thus allowing a deformation of the conveyor string or belt for changing the position of a bulb supported by it. As another example of such a flexible material a foam material may be mentioned.

When, in accordance with an embodiment of the apparatus, the cutting means comprise a band saw, frictional forces acting on the bulb due to the cutting operation may be minimised. Thus the position of the bulbs may be maintained in an optimal manner.

In one embodiment of the apparatus according to the present invention the bulb removal means comprise two spaced counter rotating shafts defining there between a gap for receiving a stem, wherein the shafts are provided with protrusions for engaging a crushed bulb. The counter rotating shafts effectively remove the crushed bulb from the stem. The stem may pass through the gap between the shafts without thereby being engaged or damaged.

The protrusions may be embodied in many ways. In one embodiment the protrusions are ribs extending substantially longitudinally along the shafts, and these have proven to be very effective in removing the crushed bulb. These ribs or protrusions may be flexible.

It further may be advantageous when each shaft with its protrusions defines a substantially conical body with, as considered in the conveying direction of the conveyor means, an increasing diameter. This may improve the effectivity of the cooperating shafts in gradually removing the crushed bulbs from the stems while limiting forces acting on the stem.

It also is possible that the shafts are positioned side by side in a plane which is inclined relative to the conveying direction of the conveyor means in such a manner that, as considered in said conveying direction, downstream ends of the shafts are positioned further away from the conveyor means than upstream ends of the shafts. This also may add to the effectivity of the shafts.

In a special embodiment of the apparatus according to the present invention a section of the conveyor means downstream from the bulb removal means comprises two conveyor strings or belts spaced for, in a clamping and vertical manner, there between receiving a stem, wherein said conveyor strings or belts are driven with different velocities, wherein the difference in velocities of the conveyor strings or belts is such that a stem is rotated at least 360° when travelling along said section of the conveyor means.

In bulbous plants, such as tulips, the stem often is surrounded or accompanied by secondary material which should be removed, such as secondary leaves which already have been detached from the stem by the previous operations of cutting, crushing and removing a part of the bulb, but which are still clamped between the stem and the conveyor strings or belts. The difference in velocity of the cooperating conveyor strings or belts causes a rotation of the stem with the secondary material and at some moment a situation will occur in which the secondary material is no longer clamped between the stem and a conveyor string or belt and thus may fall down. Because a rotation of at least 360° is caused, all secondary material positioned around a stem will reach such a position in which it is no longer clamped between the stem and a conveyor string or belt and may fall down.

Hereinafter the invention will be elucidated while referring to the drawing in which:
Figure 1 in a side elevational view shows the general layout of an embodiment of the apparatus according to the present invention;
Figure 2 on a larger scale shows the root removal means;
Figure 3 on a larger scale shows the positioning means and cutting means;
Figure 4 shows a resilient mounting of conveyor means;
Figure 5 shows part of a resilient conveyor string;
Figure 6 in a top plan view shows the bulb removal means;
Figure 7 shows a cross section according to VII-VII in figure 6, and
Figure 8 schematically and upside down represents a bulbous plant.

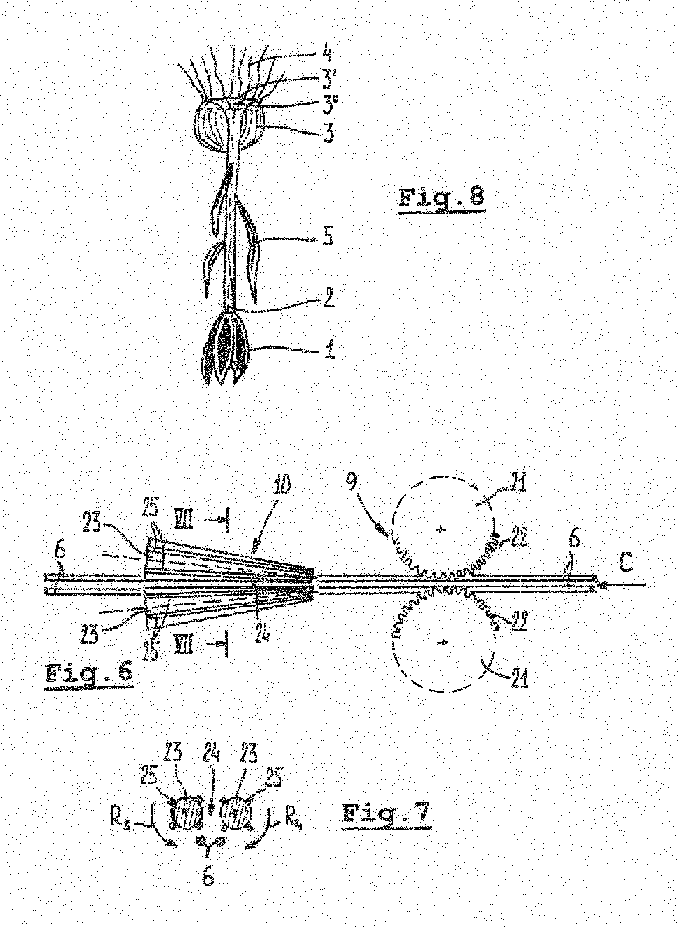

Before discussing an embodiment of the apparatus in accordance with the present invention, reference is made to figure 8 showing a bulbous plant, for example a tulip, in an upside down position (thus a position in which this bulbous plant will be conveyed through the apparatus to be described below). The plant comprises a flower 1, stem 2, bulb 3 and roots 4. Attached to the stem 2 are leaves 5. Not represented is any secondary material (such as secondary leaves) which may be directly connected to the bulb 3.

As appears from figure 8, the stem 2 extends through the bulb 3 to the extreme end 3' of the bulb 3. For optimising the economic value of the plant, it is a goal to remove the bulb 3 from the stem 2 in such a manner that the remaining stem 2 is as long as possible. This may be achieved by cutting off a bottom part 3" (in figure 8 the part of the bulb 3 above the broken line) with a dimension (thickness) as small as possible. Thereafter the remaining part of the bulb 3 will be removed, leaving the stem 2.

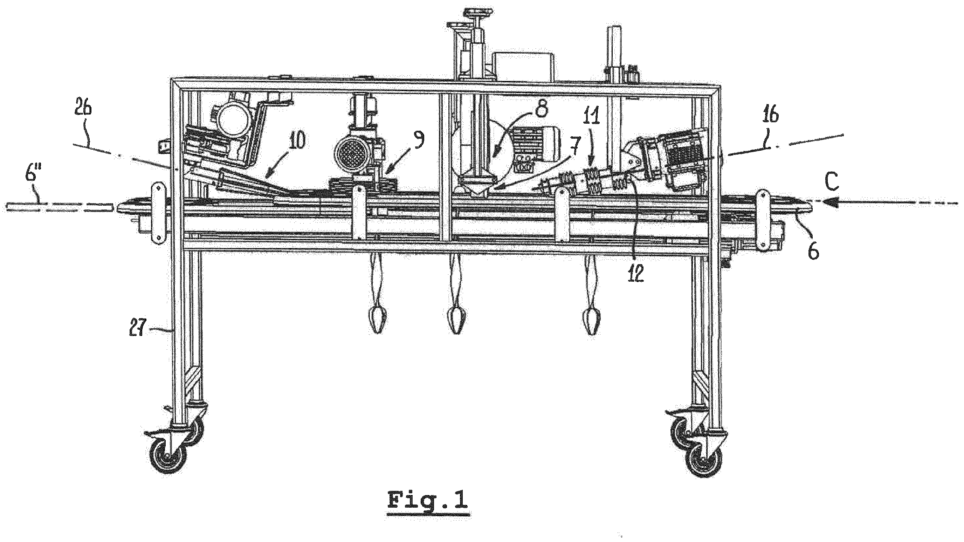

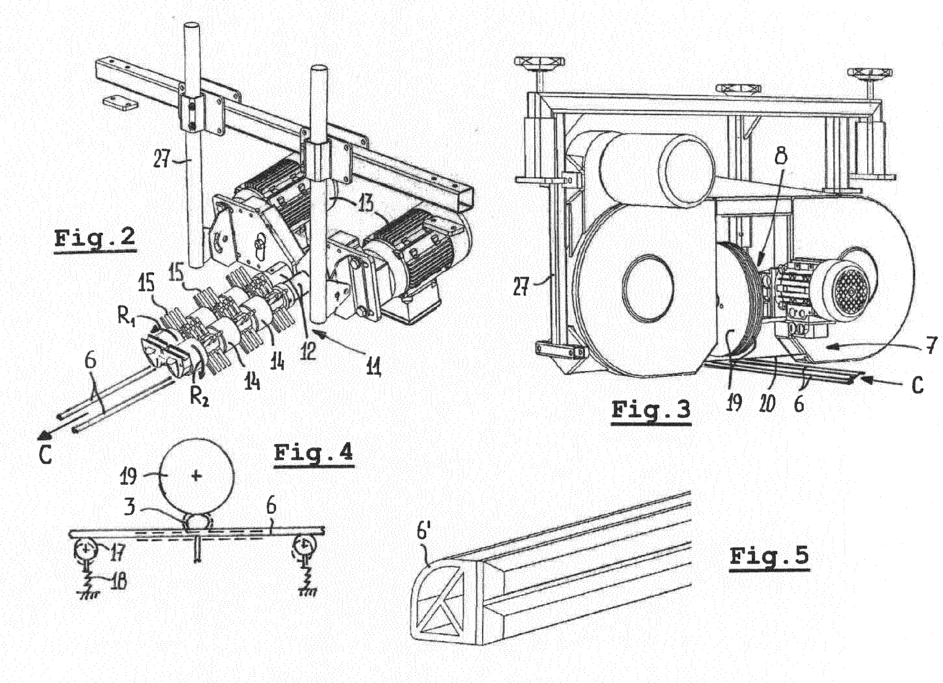

Figure 1 in a side elevational view represents an embodiment of an apparatus which is capable of achieving the above goal. Generally said apparatus for removing the stem 2 from the bulb 3 of bulbous plants comprises conveyor means 6 for the bulbous plants defining a conveying direction C (as illustrated best in figures 2, 3 and 6, these conveyor means 6 in a conventional manner may comprise cooperating spaced conveyor strings or belts for receiving there between and supporting a bulbous plant with the flower 1 facing down and the bulb 3 with roots 4 facing up; in other embodiments, however, flat conveyor belts for supporting the bulbous plants in a horizontal position may be used). The apparatus further comprises cutting means 7 for cutting off the bottom part 3" of a bulb 3, positioning means 8 for positioning the bulb 3 relative to the cutting means 7, crushing means 9 for crushing the bulb 3 of which the bottom part 3" has been cut off and bulb removal means 10 for removing the crushed bulb 3 from the stem 2.

In accordance with the present invention the apparatus further comprises root removal means 11 which, as considered in the conveying direction C of the conveyor means 6, are positioned upstream (ahead) of the cutting means 7. These root removal means are meant for removing at least part of the roots 4 from the bottom part 3" of the bulb 3 before this bottom part will be cut off by the cutting means 7. The effect is, shortly, that a better positioning of the bulbs 3 by the positioning means 8 is achieved and thus the location of a cut created by the cutting means 7 may be defined more precisely, enabling the apparatus to minimise the amount (thickness) of the bottom part 3" removed (and to maximise the remaining length of the stem 2 and thus the economic value of the resulting cut flower).

As illustrated best in figure 2, the root removal means 11 comprise two adjacent shafts 12 defining a gap (not numbered) there between. As will be explained in detail below, the shafts 12 are provided with circumferential engagement members for engaging the roots 4 of a bulb 3. The shafts are driven (motors 13) for a rotation in opposite senses R₁ and R₂ in a manner for pulling the roots 4 in the gap between the shafts 12 by means of the engagement members.

In the illustrated embodiment the engagement members in the longitudinal direction of the shafts alternatingly comprise sections provided with flexible covers 14 and sections provided with paddles 15. Each flexible cover 14 surrounds the respective shaft 12 and provides sufficient friction for firmly engaging the roots 4, and for example may be made of rubber. The paddles 15 (or any other equivalent protruding members) extend outwardly from the shafts 12 (not necessarily orthogonally; it is possible that they include an angle with the orthogonal direction with respect to the surface of the shafts 12). The paddles may be flexible, for example also manufactured from rubber or any other appropriate material. The shape, dimension and constitution of the paddles may vary over the longitudinal extension of the shafts 12.

In alternative embodiments not illustrated, the shafts 12 each may be provided only with a single flexible cover 14, or only with paddles 15 over their entire lengths.

As appears clearly from a comparison between figures 1 and 2, the shafts 12 are positioned side by side in a plane 16 which is inclined relative to the conveying direction C of the conveyor means 6 in such a manner that, as considered in said conveying direction, upstream ends of the shafts 12 (at the right hand in figure 1) are positioned further away from the conveyor means 6 than downstream ends of the shafts 12 (at the left hand in figure 1).

Bulbous plants to be processed by the present apparatus arrive in the conveying direction C in a position as shown in figure 8, thus with the bulb 3 with roots 4 pointing upward. The conveyor means 6 move the plants underneath the shafts 12 and the roots 4 are at least partly engaged by the engagement members and are removed while the bulbs 3 are supported by the conveyor means 6.

Next the bulbs 3, of which at least part of the roots 4 have been removed, arrive at the positioning means 8 and cutting means 7. For assuring that each bulb 3, irrespective its dimension, is positioned properly with respect to the cutting means 7, the conveyor means 6 at least in the region of the cutting means 7 are devised for resiliently supporting the bulbs 3 for allowing a settling movement of the bulbs under influence of the positioning means 8. Thus the same position of the extreme end 3' of the bottom part 3" of a bulb 3 relative to the cutting means 7 may be achieved irrespective the dimensions of the bulb 3.

In one embodiment illustrated in figure 4 the conveyor means 6 comprise conveyor strings or belts guided by resiliently settable guides 17 (such as guide wheels or rollers that are biased upwards by springs 18). Figure 4 shows in solid lines a position of the conveyor means 6 and guides 17 when a bulb is engaged by pressure wheels 19 (that are part of the positioning means 8). In broken lines the position is illustrated when a bigger bulb is present, thus lowering the conveyor means 6 against the force of the springs 18. In this embodiment, thus, the conveyor means 6 changes its position, rather than maintaining a fixed position while deforming.

In figure 5 an example is shown of an embodiment in which a resilient support for the bulbs 3 is obtained by conveyor means 6 which have a fixed position (in a vertical sense), but in which the conveyor means 6 are made of a resilient material. In the illustrated embodiment the conveyor means comprise conveyor strings 6' which in cross section define an at least partly hollow profile. This allows the conveyor string 6' to deform when a bulb 3 is pressed against it by the positioning means 8 (such as pressure wheels 19). In yet another embodiment (not illustrated) the conveyor strings or belts 6' may be made of a resilient foam material.

Figure 3 shows that the cutting means are provided with an endless band saw 20. Such a band saw 20 is able of making precise cuts without causing too much friction.

The bulbs 3 of which the bottom part 3" has been cut off by the band saw 20 will then arrive at the crushing means 9 which, as illustrated in figure 6, may comprise two horizontal crushing wheels 21 with circumferential toothings 33 for there between receiving and compressing the bulbs 3. Crushing the bulbs 3 will result in a situation in which the coherence between the stem 2 and the bulb 3 is lowered (some types of bulbous plants have a structure similar to onions, with successive skirts of material surrounding each other, and a compression force will easily break these skirts free from each other).

Next reference is made to figures 1, 6 and 7 for illustrating an embodiment of the bulb removal means 10. These bulb removal means 10 comprise two spaced counter rotating (R₃ and R₄) shafts 23 defining there between a gap 24 sufficiently large for receiving a stem 2 without damaging it. The shafts 23 are provided with protrusions 25 (in this particular embodiment the protrusions 25 are ribs extending substantially longitudinally along the shafts 23) for engaging a previously crushed bulb 3. As a result the bulb 3 will be removed from the stem 2 which may fall down in a receptacle or onto a conveyor for further processing/handling.

Figure 6 clearly shows that in this embodiment each shaft 23 with its protrusions 25 defines a substantially conical body with, as considered in the conveying direction C of the conveyor means 6, an increasing diameter. Further, from a comparison between figures 1 and 6 it appears that the shafts 23 are positioned side by side in a plane 26 which is inclined relative to the conveying direction C of the conveyor means 6 in such a manner that, as considered in said conveying direction C, downstream ends of the shafts 23 (left ends in figures 1 and 6) are positioned further away from the conveyor means 6 than upstream ends of the shafts 23 (right ends in figures 1 and 6).

Finally an embodiment of the apparatus is mentioned which is provided with a section 6" (represented in broken lines in figure 1 only) of the conveyor means downstream from the bulb removal means 10. This section 6" comprises, in a conventional manner, two conveyor strings or belts spaced for, in a clamping manner and in a vertical position, there between receiving a stem 2. However, these conveyor strings or belts are driven with different velocities, wherein the difference in velocities of the conveyor strings or belts of said section 6" is such that a stem is rotated at least 360° when travelling along said section 6" of the conveyor means. In bulbous plants, such as for example tulips, the stem 2 often is surrounded or accompanied by secondary material which should be removed, such as secondary leaves which already have been detached from the stem 2 by the previous operations of cutting, crushing and removing a part of the bulb 3, but which are still clamped between the stem 2 and the conveyor strings or belts 6. The difference in velocity of the cooperating conveyor strings or belts of section 6" causes a rotation of the stem 2 with the secondary material and at some moment a situation will occur in which the secondary material is no longer clamped between the stem 2 and a conveyor string or belt and thus may fall down. Because a rotation of at least 360° is caused, all secondary material positioned around a stem 2 will reach such a position in which it is no longer clamped between the stem 2 and a conveyor string or belt of the section 6" and may fall down.

In the illustrated embodiment the entire apparatus is mounted in a movable frame 27, but in an alternative embodiment the apparatus may be part of a fixed, stationary structure.

The invention is not limited to the illustrated embodiments but may be varied widely within the scope of the invention as defined by the appending claims.

## Claims

1. Apparatus for removing the stem (2) from the bulb (3) of bulbous plants, comprising conveyor means (6) for the bulbous plants, cutting means (7) for cutting off the bottom part (3") of a bulb (3) at a side of the bulb opposite to the stem, positioning means (8) for positioning the bulb relative to the cutting means, crushing means (9) for crushing the bulb of which the bottom part has been cut off and bulb removal means (10) for removing the crushed bulb from the stem, **characterized by** root removal means (11) positioned, as considered in the conveying direction (C) of the conveyor means (6), upstream of the cutting means (7) for removing at least part of the roots (4) from the bottom part (3") of the bulb (3).

2. Apparatus according to claim 1, wherein the root removal means (11) comprise two adjacent shafts (12) defining a gap there between and provided with circumferential engagement members (14,15) for engaging the roots (4) and driven for a rotation in opposite senses (R₁,R₂) in a manner for pulling the roots in the gap between the shafts by means of the engagement members.

3. Apparatus according to claim 2, wherein the engagement members at least partly comprise a flexible cover (14) surrounding the shafts (12) and providing sufficient friction for firmly engaging the roots (4).

4. Apparatus according to claim 2 or 3, wherein the engagement members at least partly comprise paddles (15) extending outwardly from the shafts (12).

5. Apparatus according to any of the claims 2-4, wherein the engagement members in the longitudinal direction of the shafts (12) alternatingly comprise flexible cover sections (14) and sections provided with paddles (15).

6. Apparatus according to any of the claims 2-5, wherein the shafts (12) are positioned side by side in a plane (16) which is inclined relative to the conveying direction (C) of the conveyor means (6) in such a manner that, as considered in said conveying direction, upstream ends of the shafts (12) are positioned further away from the conveyor means than downstream ends of the shafts.

7. Apparatus according to any of the previous claims, wherein the conveyor means (6) at least in the region of the cutting means (7) are devised for resiliently supporting the bulbs (3) for allowing a settling movement of the bulbs under influence of the positioning means (8) for achieving the same position of the extreme end (3') of the bottom part (3") relative to the cutting means irrespective the dimensions of the bulb.

8. Apparatus according to claim 7, wherein the position of the conveyor means (6) is resiliently settable.

9. Apparatus according to claim 8, wherein the conveyor means (6) comprise conveyor strings or belts guided by resiliently settable guides (17).

10. Apparatus according to claim 7, wherein the conveyor means (6) are made of a resilient material.

11. Apparatus according to any of the previous claims, wherein the cutting means (7) comprise a band saw (20).

12. Apparatus according to any of the previous claims, wherein the bulb removal means (10) comprise two spaced counter rotating shafts (23) defining there between a gap (24) for receiving a stem (2), wherein the shafts are provided with protrusions (25) for engaging a crushed bulb.

13. Apparatus according to claim 12, wherein each shaft (23) with its protrusions (25) defines a substantially conical body with, as considered in the conveying direction (C) of the conveyor means (6), an increasing diameter.

14. Apparatus according to claim 12 or 13, wherein the shafts (23) are positioned side by side in a plane (26) which is inclined relative to the conveying direction (C) of the conveyor means (6) in such a manner that, as considered in said conveying direction, downstream ends of the shafts are positioned further away from the conveyor means than upstream ends of the shafts.

15. Apparatus according to any of the previous claims, wherein a section (6") of the conveyor means (6) downstream from the bulb removal means (10) comprises two conveyor strings or belts spaced for, in a clamping and vertical manner, there between receiving a stem (2), wherein said conveyor strings or belts are driven with different velocities, and wherein the difference in velocities of the conveyor strings or belts is such that a stem is rotated at least 360° when travelling along said section of the conveyor means.

## Patentansprüche

1. Vorrichtung zum Entfernen des Stiels (2) von der Zwiebel (3) von Zwiebelgewächsen, aufweisend Fördermittel (6) für die Zwiebelgewächse, Schneidmittel (7) zum Abschneiden des unteren Teils (3") einer Zwiebel (3) auf einer zu dem Stiel entgegengesetzten Seite der Zwiebel, Positioniermittel (8) zum Positionieren der Zwiebel relativ zu den Schneidmitteln, Quetschungsmittel (9) zum Zerquetschen der Zwiebel, von welcher der untere Teil abgeschnitten worden ist, und Zwiebelentfernungsmittel (10) zum Entfernen der zerquetschten Zwiebel von dem Stiel, **gekennzeichnet durch** Wurzelentfernungsmittel (11), die, wenn in der Förderrichtung (C) der Fördermittel (6) gesehen, stromaufwärtsseitig der Schneidmittel (7) positioniert sind, zum Entfernen wenigstens eines Teils der Wurzeln (4) von dem unteren Teil (3") der Zwiebel (3).

2. Vorrichtung gemäß Anspruch 1, wobei die Wurzelentfernungsmittel (11) zwei benachbarte Wellen (12) aufweisen, die dazwischen einen Spalt definieren und die mit umfänglichen Eingriffsmitteln (14, 15) versehen sind zum in-Eingriff-Stehen mit den Wurzeln (4) und die in entgegengesetzte Richtungen (R₁, R₂) drehangetrieben sind in einer Weise zum Ziehen der Wurzeln in den Spalt zwischen den Wellen mittels der Eingriffselemente.

3. Vorrichtung gemäß Anspruch 2, wobei die Eingriffselemente zumindest teilweise aufweisen eine flexible Abdeckung (14), die die Wellen (12) umgibt und die genügend Reibung bereitstellt zum festen in-Eingriff-Stehen mit den Wurzeln (4).

4. Vorrichtung gemäß Anspruch 2 oder 3, wobei die Eingriffselemente wenigstens teilweise Schaufeln (15) aufweisen, die sich von den Wellen (12) aus nach außen erstrecken.

5. Vorrichtung gemäß irgendeinem der Ansprüche 2-4, wobei die Eingriffselemente in der Längsrichtung der Wellen (12) abwechselnd aufweisen flexible-Abdeckung-Abschnitte (14) und mit Schaufeln (15) versehene Abschnitte.

6. Vorrichtung gemäß irgendeinem der Ansprüche 2-5, wobei die Wellen (12) in einer Ebene (16) nebeneinander positioniert sind, welche relativ zu der Förderrichtung (C) der Fördermittel (6) geneigt ist, sodass, wenn in besagter Förderrichtung gesehen, stromaufwärtsseitige Enden der Wellen (12) weiter weg von den Fördermitteln positioniert sind als stromabwärtsseitige Enden der Wellen.

7. Vorrichtung gemäß irgendeinem der vorhergehenden Ansprüche, wobei die Fördermittel (6) wenigstens im Bereich der Schneidmittel (7) gestaltet sind zum elastischen Halten der Zwiebeln (3), um eine Setzbewegung der Zwiebeln zu erlauben unter dem Einfluss der Positioniermittel (8) zum Erreichen der gleichen Position des äußersten Endes (3') des unteren Teils (3") relativ zu den Schneidmitteln unabhängig von den Abmessungen der Zwiebel.

8. Vorrichtung gemäß Anspruch 7, wobei die Position der Fördermittel (6) elastisch setzbar ist.

9. Vorrichtung gemäß Anspruch 8, wobei die Fördermittel (6) Förderketten oder -bänder aufweisen, die von elastisch setzbaren Führungen (17) geführt sind.

10. Vorrichtung gemäß Anspruch 7, wobei die Fördermittel (6) aus einem elastischen Material gemacht sind.

11. Vorrichtung gemäß irgendeinem der vorhergehenden Ansprüche, wobei die Schneidmittel (7) eine Bandsäge (20) aufweisen.

12. Vorrichtung gemäß irgendeinem der vorhergehenden Ansprüche, wobei die Zwiebelentfernungsmittel (10) zwei im Abstand angeordnete gegenrotierende Wellen (23) aufweisen, die dazwischen einen Spalt (24) zum Aufnehmen eines Stiels (2) definieren, wobei die Wellen mit Vorsprüngen (25) zum in-Eingriff-Stehen mit einer zerquetschten Zwiebel versehen sind.

13. Vorrichtung gemäß Anspruch 12, wobei jede Welle (23) mit ihren Vorsprüngen (25) einen im Wesentlichen konischen Körper mit, wenn in der Förderrichtung (C) der Fördermittel (6) gesehen, einem ansteigenden Durchmesser definiert.

14. Vorrichtung gemäß Anspruch 12 oder 13, wobei die Wellen (23) in einer Ebene (26) nebeneinander positioniert sind, welche relativ zu der Förderrichtung (C) der Fördermittel (6) geneigt ist, sodass, wenn in besagter Förderrichtung gesehen, stromabwärtsseitige Enden der Wellen weiter weg von den Fördermitteln positioniert sind als stromaufwärtsseitige Enden der Wellen.

15. Vorrichtung gemäß irgendeinem der vorherigen Ansprüche, wobei ein Abschnitt (6") der Fördermittel (6) stromabwärtsseitig von den Zwiebelentfernungsmitteln (10) zwei im Abstand angeordnete Förderketten oder -bänder aufweist zum, in einer klemmenden und vertikalen Weise, dazwischen-Aufnehmen eines Stiels (2), wobei die Förderketten oder -bänder mit unterschiedlichen Geschwindigkeiten angetrieben sind, und wobei der Unterschied in den Geschwindigkeiten der Förderketten oder-bänder derart ist, dass ein Stiel um wenigstens 360° rotiert wird, wenn er sich entlang des besagten Abschnitts der Fördermittel bewegt.

## Revendications

1. Appareil pour éliminer la tige (2) du bulbe (3) de plantes bulbeuses, comprenant des moyens de transport (6) pour les plantes bulbeuses, des moyens de découpe (7) pour découper la partie inférieure (3") d'un bulbe (3) au niveau d'un côté du bulbe opposé à la tige, des moyens de positionnement (8) pour positionner le bulbe par rapport aux moyens de découpe, des moyens de broyage (9) pour broyer le bulbe dont la partie inférieure a été découpée et des moyens d'élimination de bulbe (10) pour éliminer le bulbe broyé de la tige, **caractérisé par** des moyens d'élimination de racine (11) positionnés, lorsqu'ils sont considérés dans la direction de transport (C) des moyens de transport (6), en amont des moyens de découpe (7) pour éliminer au moins une partie des racines (4) de la partie inférieure (3") du bulbe (3).

2. Appareil selon la revendication 1, dans lequel les moyens d'élimination de racine (11) comprennent deux arbres adjacents (12) définissant un espace entre eux et pourvus d'organes de mise en prise circonférentielle (14, 15) pour mettre en prise les racines (4) et entraînés pour une rotation dans des sens opposés (R₁, R₂) de manière à tirer les racines dans l'espace entre les arbres au moyen des organes de mise en prise.

3. Appareil selon la revendication 2, dans lequel les organes de mise en prise comprennent au moins en partie un couvercle souple (14) entourant les arbres (12) et fournissant un frottement suffisant pour mettre en prise solidement les racines (4).

4. Appareil selon la revendication 2 ou 3, dans lequel les organes de mise en prise comprennent au moins en partie des palettes (15) s'étendant vers l'extérieur à partir des arbres (12).

5. Appareil selon l'une quelconque des revendications 2 à 4, dans lequel les organes de mise en prise dans la direction longitudinale des arbres (12) comprennent en alternance des sections de couvercle souples (14) et des sections pourvues de palettes (15).

6. Appareil selon l'une quelconque des revendications 2 à 5, dans lequel les arbres (12) sont positionnés côte à côte dans un plan (16) qui est incliné par rapport à la direction de transport (C) des moyens de transport (6) de sorte que, lorsqu'ils sont considérés dans ladite direction de transport, des extrémités amont des arbres (12) soient positionnées davantage à distance des moyens de transport que des extrémités aval des arbres.

7. Appareil selon l'une quelconque des revendications précédentes, dans lequel les moyens de transport (6) au moins dans la région des moyens de découpe (7) sont conçus pour supporter de façon résiliente les bulbes (3) pour permettre un mouvement de tassement des bulbes sous l'influence des moyens de positionnement (8) pour atteindre la même position que l'extrémité la plus éloignée (3') de la partie inférieure (3") par rapport aux moyens de découpe indépendamment des dimensions du bulbe.

8. Appareil selon la revendication 7, dans lequel la position des moyens de transport (6) est réglable de façon résiliente.

9. Appareil selon la revendication 8, dans lequel les moyens de transport (6) comprennent des cordes ou courroies de transport guidées par des guides réglables de façon résiliente (17).

10. Appareil selon la revendication 7, dans lequel les moyens de transport (6) sont faits d'un matériau résilient.

11. Appareil selon l'une quelconque des revendications précédentes, dans lequel les moyens de découpe (7) comprennent une scie à ruban (20).

12. Appareil selon l'une quelconque des revendications précédentes, dans lequel les moyens d'élimination de bulbe (10) comprennent deux arbres contre-rotatifs espacés (23) définissant entre eux un espace (24) pour recevoir une tige (2), dans lequel les arbres sont pourvus de protubérances (25) pour mettre en prise un bulbe broyé.

13. Appareil selon la revendication 12, dans lequel chaque arbre (23) avec ses protubérances (25) définit un corps sensiblement conique avec, lorsqu'il est considéré dans la direction de transport (C) des moyens de transport (6), un diamètre croissant.

14. Appareil selon la revendication 12 ou 13, dans lequel les arbres (23) sont positionnés côte à côte dans un plan (26) qui est incliné par rapport à la direction de transport (C) des moyens de transport (6) de sorte que, lorsqu'ils sont considérés dans ladite direction de transport, des extrémités aval des arbres soient positionnées plus à distance des moyens de transport que des extrémités amont des arbres.

15. Appareil selon l'une quelconque des revendications précédentes, dans lequel une section (6") des moyens de transport (6) en aval des moyens d'élimination de bulbe (10) comprend deux cordes ou courroies de transport espacées pour, par serrage et verticalement, recevoir entre elles une tige (2), dans lequel lesdites cordes ou courroies de transport sont entraînées avec des vitesses différentes, et dans lequel la différence de vitesses des cordes ou courroies de transport est telle qu'une tige est mise en rotation à au moins 360° lors d'un déplacement le long de ladite section des moyens de transport.
